Europäisches Patentamt

European Patent Office

Office européen des brevets

(11) Veröffentlichungsnummer: **0 260 591**
A1

## (12) EUROPÄISCHE PATENTANMELDUNG

(21) Anmeldenummer: 87113178.5

(51) Int. Cl.4: **A22C 13/00**

(22) Anmeldetag: 09.09.87

(30) Priorität: 18.09.86 DE 3631669

(43) Veröffentlichungstag der Anmeldung:
23.03.88 Patentblatt 88/12

(84) Benannte Vertragsstaaten:
AT BE CH DE FR GB IT LI NL SE

(71) Anmelder: HOECHST AKTIENGESELLSCHAFT
Postfach 80 03 20
D-6230 Frankfurt am Main 80(DE)

(72) Erfinder: Stenger, Karl
Theodor-Heuss-Strasse 27
D-6220 Rüdesheim(DE)
Erfinder: Faust, Horst
Lohmühlweg 17
D-6200 Wiesbaden(DE)

(54) Verstärkungsfreie Folie aus Cellulose.

(57) Es wird eine verstärkungsfreie Folie aus regenerierter Cellulose, geeignet zur Herstellung von - schlauchförmigen Wursthüllen mit einer längsaxialen Naht, beschrieben, deren kennzeichnenden Merkmale darin bestehen, daß sie - ausgehend von einem Flächengewicht von 20 bis 50, vorzugsweise 30 bis 40, insbesondere 32 bis 37 g/m² und von einem Feuchtigkeitsgehalt von 6 bis 15 Gew.-% - nach 30-minütiger Lagerung in Wasser von 30 bis 40°C eine Zunahme in Längsrichtung von 0,5 bis 1,5 % und einen Schrumpf in Querrichtung von 3 bis 8, insbesondere 4 bis 7 % aufweist.

EP 0 260 591 A1

## Verstärkungsfreie Folie aus Cellulose

Die Erfindung betrifft eine verstärkungsfreie Folie aus regenerierter Cellulose, welche geeignet ist zur Herstellung von schlauchförmigen Wursthüllen mit einer längsaxialen Naht. Sie bezieht sich ferner auf ein Verfahren von der im Oberbegriff des Anspruchs 4 genannten Art und auf eine Wursthülle, welche aus einer solchen Folie besteht.

Die Herstellung von bahnförmigen Cellulosefolien, die als Trägermaterial für schlauchförmige Wursthüllen verwendet werden sollen, ist beispielsweise in der EP-B-54 162 beschrieben. In den Figuren ist die Herstellung der Folien, die Schlauchformung und fertiggestellte Wurst dargestellt. Die dort beschriebenen Folien sind allerdings faserverstärkt. Ihre mechanischen Eigenschaften sind deshalb mit denen von unverstärkten Folien aus Cellulose, sogenannte Zellglasfolien, nicht vergleichbar.

Es sind ferner Verfahren beschrieben worden, bei denen die Wurstmasse in einen direkt am Füllrohr gebildeten Schlauch eingepreßt wird (US-Patentschriften 2,607,696; 2,653,432; 2,686,725). Als hierzu geeignetes Folienmaterial wurde auch regenerierte Cellulose genannt.

Weiterhin ist aus der US-A-2,698,967 ein Verfahren zur Herstellung von Cellulosefolien bekannt geworden, bei dem die nach dem Viskose-Verfahren fertig hergestellte Cellulosefolie auf einen Feuchtigkeitsgehalt von 12 bis 15 Gew.-% gebracht und einer Nachverstreckung um 4 bis 7 % in Querrichtung unterworfen wurde. Mit dieser Nachverstreckung in Querrichtung sollte allerdings nur der beim vorhergehenden Trockenprozess eingetretene Querschrumpf kompensiert werden. Dieser Druckschrift ist ferner zu entnehmen, daß getrocknete Cellulosefilme normalerweise beim Wiederbefeuchten mit Wasser aufquellen und sich dabei in Querrichtung um 30 % ausdehnen sowie in Längsrichtung um 10 % schrumpfen. Die nachverstreckten Filme sollen dagegen in Quer-und Längsrichtung ausgeglichenere Eigenschaften zeigen.

Aus diesem Quellverhalten der Cellulosehüllen ergeben sich schwerwiegende Nachteile bei ihrer Verwendung als schlauchförmige Wursthüllen, denn beim Einfüllen von Wurstbrät und dem nachfolgenden Brühprozess nimmt die Cellulosefolie Wasser auf und vergrößert sich hierbei in Umfangsrichtung. Die Wursthülle zeigt infolgedessen ein schlaffes und faltiges Aussehen und läßt sich nur schwierig von der Wurst abschälen.

Es ist somit Aufgabe der vorliegenden Erfindung, die verstärkungsfreien Folien aus Cellulose zur Herstellung von schlauchförmigen Wursthüllen dahingehend zu verbessern, daß die erhaltenen Würste ein pralles, faltenfreies Aussehen zeigen, und daß sich die Wursthüllen problemlos von der eingeschlossenen Wurstmasse abschälen lassen, insbesondere auf schnell-laufenden Schälvorrichtungen.

Diese Aufgabe wird gelöst durch die im Anspruch 1 angegebene Folie, durch das Verfahren mit den in Anspruch 4 genannten Schritten und durch eine Wursthülle, welche aus dieser Folie besteht (Anspruch 10). Die abhängigen Ansprüche 2 und 3 geben bevorzugte mechanische Eigenschaften der Folie an, die abhängigen Ansprüche 5 bis 9 betreffen zweckmäßige Ausführungsformen des Verfahrens nach Anspruch 4.

Die Folie aus regenerierter Cellulose enthält keine Faserverstärkung und besteht somit praktisch nur aus Zellglas, Wasser und Weichmacher. Sie zeigt gewöhnlich den für dieses Material üblichen Feuchtigkeitsgehalt von etwa 6 bis 15, insbesondere 7 bis 12 Gew.-%, wie er sich beim Lagern der Folie unter gewöhnlichen Temperaturen (15 bis 30°C) und üblicher Luftfeuchte von etwa 40 bis 70 % einstellt. Auch der Gehalt an Weichmacher, welcher insbesondere ein Polyol wie Glycerin ist, liegt in dem für Wursthüllen aus Cellulose üblichen Bereich, nämlich bei etwa 16 bis 20 Gew.-%. Diese Anteile beziehen sich immer auf das Gesamtgewicht der Folie.

Zur Bestimmung der Dimensionsänderung bei Wasseraufnahme wird ein 10 $\times$ 10 cm großes Folienmuster 30 min. im warmen Wasser von etwa 30 bis 40°C gelagert. Es ist dann vollständig mit Wasser gesättigt, d.h., der Wassergehalt der Folie entspricht dann ihrem Quellwert, welcher bei unverstärkten Cellulosefolien gewöhnlich im Bereich von etwa 140 bis 170 % liegt. Im vorliegenden Fall ist der Quellwert infolge der Nachverstreckung in Querrichtung erniedrigt und liegt bei etwa 125 bis 140 %.

Der Quellwert ist somit das maximale Wasseraufnahmevermögen der Folie und gibt den maximalen Wassergehalt der Folie, bezogen auf ihr Gesamtgewicht, an. Er wird nach einer Methode ermittelt, wie sie in der DE-B-25 12 994 (Spalte 8) angegeben wurde.

Der für die Beschreibung der Folie gebrauchte Ausdruck "Längsrichtung" oder "Längenzunahme" bezieht sich auf die Maschinenrichtung, der Ausdruck "Querrichtung", "Querschrumpf" oder "Umfangsrichtung" bezeichnet die Richtung senkrecht zur "Längsrichtung" bzw. senkrecht zur "Maschinenrichtung". Die Dimensionsänderung wird unmittelbar nach der Wässerung des rechteckig zugeschnittenen Folienmusters festgestellt, bei dem die Längsränder und Querränder genau der Längs-bzw.

Querrichtung der Folie entsprechen müssen. Die Messung erfolgt am flachgelegten Folienmuster, wobei es zweckmäßigerweise auf einer Glasplatte aufgelegt wird. Die Naßdehnung bzw. der Naßschrumpf ist dann die prozentuale Dimensionsänderung, bezogen auf die Länge bzw. Breite vor der Wässerung (Wassergehalt 6 bis 15 Gew.-%, bezogen auf das Gesamtgewicht).

Die Messung des Wassergehaltes erfolgt nach Karl Fischer oder mit einem Leitfähigkeits-Meßgerät (z.B. "Aqua-Boy"), die Messung der Reißfestigkeit und Reißdehnung erfolgt mit einer elektronischen Reißmaschine nach DIN 53 455. Unter Reißfestigkeit ist die Widerstandsfähigkeit des Probekörpers gegenüber der Zugbeanspruchung im Augenblick des Reißens zu verstehen. Sie wird gemessen als Reißkraft (N), bezogen auf den Querschnitt (mm$^2$). Die Reißdehnung ist die prozentuale Verlängerung des Probekörpers gegenüber der Ausgangslänge bei Belastung im Augenblick des Reißens und wird in Prozent angegeben. Der Probekörper für die Messung der Reißfestigkeit und Reißdehnung hat eine Länge von 100 mm, eine Breite von 15 mm und eine Dicke entsprechend einem Flächengewicht von 20 bis 50 g/m$^2$.

Zur Herstellung der Folie dient das an sich bekannte Viskoseverfahren, bei dem eine alkalische Lösung von Natrium-Cellulosexanthogenat, die gewöhnlich als Viskoselösung bezeichnet wird, bahnförmig durch eine Breitschlitzdüse ausgepreßt und mit der sauren Koagulationsflüssigkeit auf Basis von Schwefelsäure zur Koagulation gebracht wird. In weiteren Stufen wird das zunächst noch überwiegend aus Viskose-Gel bestehende bahnförmige Produkt mit Regenerierbädern aus verdünnter Schwefelsäure in Cellulosehydrat-Gel überführt. Danach durchläuft die Bahn Waschbäder zur Entfernung von Säure und Salzen, gegebenenfalls auch Entschwefelungs-und/oder Bleichbäder, und schließlich noch ein Weichmacherbad. Die aus Cellulosehydrat-Gel, Weichmacher und noch überwiegend aus Wasser bestehende Bahn wird durch intensive Trocknung bei 80 bis 140° C in regenerierte Cellulose übergeführt und auf den gewünschten Wassergehalt eingestellt, der zweckmäßigerweise 8 bis 12 Gew.-%, bezogen auf das Gesamtgewicht, beträgt.

Erst mit den weiteren nachfolgenden Schritten erhält die Folie ihre erfindungswesentlichen Eigenschaften.

Hierbei wird die nach dem Viskoseverfahren fertiggestellte Folie erneut stark angefeuchtet, danach an den beiden Bahnkanten mit geeigneten Greifeinrichtungen in Querrichtung gezogen und anschließend im gedehnten Zustand getrocknet, wobei ein Schrumpfen der feuchten Bahn beim Trockenprozess verhindert wird.

Geeignete Greifeinrichtungen sind beispielsweise Nadelwalzen, Nadelbänder, Nadelketten, Greifkluppenketten oder eine schnurförmige Führung, wie sie bei der Herstellung von Folien als Querstreckvorrichtungen an sich bekannt sind. Diese Vorrichtungen strecken die Folie in Querrichtung und transportieren sie gleichzeitig in Bahnrichtung durch die weiteren Behandlungsstationen.

Die Befeuchtung der Folie erstreckt sich nicht auf ihre Randzonen, welche vielmehr über eine Breite von etwa 3 bis 7cm trocken bleiben müssen. Wegen der höheren Festigkeit des trockenen Materials besteht dann nicht die Gefahr, daß das Material durch die beim Verstrecken auftretenden Zugkräfte an den Greifelementen ausreißt.

Je nach Festigkeit der Folie und dem Grad der Querverstreckung ist ferner eine Verstärkung der Randzonen vorgesehen. Dies geschieht beispielsweise durch Aufbringen eines Klebebandes oder durch Umfalten des Randes und Fixieren der Faltung durch Einlage eines doppelseitigen Klebebandes oder durch Einbringen eines Klebstoffes.

Vorzugsweise werden die Randzonen durch Aufbringen eines Hydrophobierungsmittels oder Lackes trocken gehalten.

Geeignete Hydrophobierungsmittel sind beispielsweise die unter dem Warenzeichen Scotchgard (Hersteller 3 M Company) vertriebenen Imprägniermittel auf Fluorbasis, wie Fluorkohlenstoffpolymere oder Fluoralkylchrom-III-komplex-Lösungen, oder Polymere auf Basis von Siliciumorganischen-Verbindungen.

Das Aufbringen des Wassers erfolgt mit einer üblichen Vorrichtung, z.B. mit einer Sprühvorrichtung, Drahtrakel oder durch Walzenantrag, vorzugsweise von beiden Seiten, oder man führt die Folie durch ein Wasserbad. Es ist auch möglich, die beiden Seiten der Folie mit verschiedenen wässrigen Lösungen oder Emulsionen zu befeuchten, z. B. auf einer Folienoberfläche mit einer die Abschälbarkeit der Folie verbessernden Präparation, welche die spätere Innenseite der daraus hergestellten Wursthülle bildet.

Sobald der gewünschte Feuchtigkeitsgehalt, welcher oberhalb 80 Gew.-% liegt, insbesondere mindestens 100 Gew.-% beträgt, erreicht ist, wird die Folie unter weiterer Vorwärtsbewegung allmählich bis auf den angestrebten Endwert in Querrichtung gestreckt. Im allgemeinen erfolgt die Dehnung der Folie bei maximalem Feuchtigkeitsgehalt, welcher entsprechend dem Quellwert der Cellulosefolie üblicherweise bei 140 bis 170 % liegt.

Nach Erreichen der maximalen Querdehnung, welche im Bereich von 18 bis 35 % liegt, wird die Folie unter Aufrechterhaltung der Spannung unter schonenden Bedingungen getrocknet. Hierbei ist darauf zu achten, daß die Folie möglichst faltenfrei ist und kein überschüssiges Oberflächenwasser aufweist. Während der Wärmeeinwirkung läßt man gegebenenfalls einen geringen Schrumpf zu, so daß eine verringerte Querdehnung von 15 bis 25 % resultiert. Wenn eine Restfeuchte von höchstens 20, insbesondere ca. 12 % oder weniger erreicht ist, wird die Querzugkraft aufgehoben und die trockengebliebenen, unverstreckten Randzonen abgeschnitten. Die Folie wird dann entweder aufgewickelt oder direkt zur Herstellung von Schlauchhüllen weiterverarbeitet. Die Schlauchformung und Schlauchbildung erfolgt in üblicher Weise, wie es beispielsweise in den Europäischen Patentschriften 37 543, 54 162, 76 436, 80 120 oder 101 892 beschrieben ist.

Beispiel:

Eine nach dem Viskoseverfahren hergestellte 600 mm breite verstärkungsfreie Folie aus regenerierter Cellulose, deren Kenndaten in Tabelle 1 angegeben sind (Grundmaterial), wurde auf ihren beiden Randzonen jeweils mit einem 40 mm breiten Klebeband versehen. Die Folie wurde dann über einen "Fountainbarcoater" (Drahtrakelantrag) gefahren und auf einer Breite von 520 mm einseitig befeuchtet. Die Folie wurde an den trockengebliebenen verstärkten Randzonen mit einer Nadelkette aufgenadelt und danach die Rückseite der Folie ebenfalls unter Aussparung der Randzonen mit Hilfe eines Rasterwalzenantragwerkes befeuchtet. In dem sich kontinuierlich anschließenden Querstreckprozess wurde die Folie um 25 % querverstreckt und unter Beibehaltung dieser Querverstreckung schonend bis zu einem Feuchtigkeitsgehalt von etwa 9 Gew.-% getrocknet. Nach erfolgtem Ausnadeln wurden die unverstreckten Randpartien weggesäumt und die Folie zur Weiterverarbeitung aufgewikkelt.

Aus der Tabelle 1 sind die Änderungen der Folieneigenschaften infolge der Querverstreckung zu ersehen.

## Tabelle 1

| | | Grundmaterial | Material nach Querverstreckung |
|---|---|---|---|
| Flächengewicht (g/m$^2$) | | 41,3 | 33,9 |
| Wassergehalt (%) | | 8,7 | 8,8 |
| Weichmachergeh. (%) (Glycerin) | | 18,8 | 17,7 |
| Reißfestigkeit (N/mm$^2$) (quer) | | 79,9 trocken 45,8 naß | 103,1 trocken 52,3 naß |
| Reißfestigkeit (N/mm$^2$) (längs) | | 118,4 trocken 44,1 naß | 120,4 trocken 48,1 naß |
| Reißdehnung (%) (quer) | | 78,6 trocken 126,0 naß | 54,0 trocken 92,2 naß |
| Reißdehnung (%) (längs) | | 33,2 trocken 44,3 naß | 38,2 trocken 49,2 naß |
| Quellwert (%) | | 144 | 134 |

Die im nassen Zustand gemessenen Probestücke waren zuvor 30 Minuten in Wasser von etwa 35° C gelagert worden und waren vollständig mit Wasser gesättigt. Die trockenen Probestücke zeigten einen Feuchtigkeitsgehalt von etwa 9 %. Neben der Erzielung einer erhöhten Naßreißfestigkeit und der Verminderung des Quellwertes weist die Cellulosehydratfolie nun ein geändertes Quellverhalten auf.

In der Tabelle 2 sind die jeweiligen Naßquellwerte als prozentuale Dimensionsänderung nach 30-minütigem Wässern eines 10 × 10 cm großen Folienzuschnitts wiedergegeben, welcher vor dem Wässern einen Feuchtigkeitsgehalt von etwa 9 % gezeigt hatte. Die negativen Werte entsprechen einer Schrumpfung, die positiven einer Zunahme des Materials in Längs-bzw. Querrichtung.

Tabelle 2

|  | Längen-änderung (%) | Breiten-änderung (%) | Dicken-änderung (%) |
|---|---|---|---|
| Grundmaterial | ± 0 | + 3 | + 147 |
| 25 % querverstreckt nach Beispiel | + 1 | - 5 | + 115 |

Aus der zuvor beschriebenen nachverstreckten Folie und der zugehörigen Vergleichsware (Grundmaterial) wurden längsaxial geklebte Schlauchhüllen mit 24,5 mm Flachbreite hergestellt.

Beide Schlauchhüllentypen wurden gerafft und danach einem Füllversuch mit Wurstbrät vom Typ der Wiener Würstchen unterzogen. Die bei diesem Füllprozess erfolgte Wasseraufnahme löste beim nachverstreckten Material einen Naßschrumpf aus, der zu prallen und festen Würsten führte.

Im Gegensatz dazu lieferte das Vergleichsmaterial infolge der Naßdehnung faltige Hüllen. Weiterhin zeigten die damit hergestellten Würstchen nach dem Abschälen der Hülle eine ungleichmäßige Oberfläche.

## Ansprüche

1. Verstärkungsfreie Folie aus regenerierter Cellulose, geeignet zur Herstellung von schlauchförmigen Wursthüllen mit einer längsaxialen Naht, dadurch gekennzeichnet, daß sie - ausgehend von einem Flächengewicht von 20 bis 50, vorzugsweise 30 bis 40, insbesondere 32 bis 37 g/m$^2$ und von einem Feuchtigkeitsgehalt von 6 bis 15 Gew.-% - nach 30-minütiger Lagerung in Wasser von 30 bis 40° C eine Zunahme in Längsrichtung von 0,5 bis 1,5 % und einen Schrumpf in Querrichtung von 3 bis 8, insbesondere 4 bis 7 % aufweist

2. Folie nach Anspruch 1, dadurch gekennzeichnet, daß sie nach der Lagerung in Wasser eine Reißdehnung in Querrichtung von 85 bis 100 % und in Längsrichtung von 46 bis 55 % besitzt.

3. Folie nach Anspruch 1 oder 2, dadurch gekennzeichnet, daß sie nach der Lagerung in Wasser eine Reißfestigkeit in Querrichtung von 49 bis 56 N/mm$^2$ und in Längsrichtung von 45 bis 52 N/mm$^2$ besitzt.

4. Verfahren zur Herstellung der verstärkungsfreien Folie aus regenerierter Cellulose nach Anspruch 1, umfassend die Schritte

(a) die bahnförmig extrudierte Viskose wird zu Viskose-Gel koaguliert und zu Cellulosehydrat-Gel regeneriert,

(b) das bahnförmige Cellulosehydrat-Gel wird getrocknet,

(c) die getrocknete Cellulosebahn wird erneut befeuchtet, in diesem Zustand einer Nachverstreckung unterworfen und danach nochmals getrocknet,

dadurch gekennzeichnet, daß die Folie im Schritt (c) zunächst auf einen Feuchtigkeitsgehalt von mindestens 80, insbesondere mindestens 100 Gew.-%, bezogen auf ihr Gesamtgewicht, mit Wasser oder wäßriger Lösung angefeuchtet wird, in diesem Zustand danach in Querrichtung um 18 bis 35, insbesondere 20 bis 30 % gestreckt wird, im weiterhin gestreckten Zustand getrocknet wird, wobei während dieser Wärmeeinwirkung die Querdehnung gegebenenfalls bis auf 15, insbesondere auf 20 bis 25 % verringert wird, und die Streckkräfte bis zum Erreichen eines Feuchtigkeitsgehaltes von höchstens 20, insbesondere 12 Gew.-%, beibehalten werden.

5. Verfahren nach Anspruch 4, dadurch gekennzeichnet, daß das bahnförmige Produkt beim Trocknen der Stufe (b) an den Rändern festgehalten und dadurch am Schrumpfen in Querrichtung gehindert wird.

6. Verfahren nach Anspruch 4 oder 5, dadurch gekennzeichnet, daß die Folie im Schritt (c) bis zur Sättigung mit Wasser oder wäßriger Lösung befeuchtet wird.

7. Verfahren nach einem der Ansprüche 4 bis 6, dadurch gekennzeichnet, daß die Randzonen der Folie im Schritt (c) nicht befeuchtet werden.

8. Verfahren nach Anspruch 7, dadurch gekennzeichnet, daß die Randzonen der Folie im Schritt (c) abgedeckt sind, insbesondere mit einem Klebeband, Hydrophobierungsmittel oder Lack, und die Folie zum Befeuchten vollständig in ein Wasserbad eingetaucht wird.

9. Verfahren nach einem der Ansprüche 4 bis 8, dadurch gekennzeichnet, daß die zur Befeuchtung im Schritt (c) verwendete wäßrige Lösung Mittel zur Verbesserung der Schälbarkeit der Wursthülle enthält.

10. Wursthülle, bestehend aus einer Folie nach einem der Ansprüche 1 bis 3.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-3 318 906 (HOECHST)<br>* Ansprüche 1-8 *<br>--- | 1 | A 22 C 13/00 |
| D,A | EP-A-0 054 162 (HOECHST)<br>* Anspruch 1 *<br>----- | 1 | |

RECHERCHIERTE SACHGEBIETE (Int. Cl.4)

A 22 C

Der vorliegende Recherchenbericht wurde für alle Patentansprüche erstellt

| Recherchenort | Abschlußdatum der Recherche | Prüfer |
|---|---|---|
| DEN HAAG | 07-12-1987 | PERMENTIER W.A. |

EPO FORM 1503 03.82 (P0403)